# EUROPÄISCHE PATENTSCHRIFT

(11) **EP 3 007 924 B1**
(45) Veröffentlichungstag und Bekanntmachung des Hinweises auf die Patenterteilung: **19.04.2017**
(21) Anmeldenummer: 14739823.4
(22) Anmeldetag: 16.07.2014
(51) Int. Cl.: B60L 9/14, B60L 9/30, B60L 9/22, H02M 3/22, H02J 1/00, H02J 3/00, H02J 4/00, H02M 3/158, H02M 3/335, H02M 3/337, H02M 1/00

(54) **SCHALTUNG ZUR LEISTUNGSVERTEILUNG MIT RESONANZWANDLERN**
POWER DISTRIBUTION CIRCUIT WITH RESONANCE CONVERTERS
CIRCUIT DE RÉPARTITION DE PUISSANCE ÉQUIPÉ DE CONVERTISSEURS À RÉSONANCE

(30) Priorität: 19.07.2013 DE 102013107750
(43) Veröffentlichungstag der Anmeldung: 20.04.2016
(73) Patentinhaber: SMA Railway Technology GmbH, 34123 Kassel (DE)
(72) Erfinder: WEBER, Johannes, 34302 Guxhagen (DE); BACHMANN, Guido, 34302 Guxhagen (DE); BERGER, Andreas, 34266 Niestetal (DE)
(74) Vertreter: Lahnor, Peter
(86) Internationale Anmeldenummer: PCT/EP2014/065253
(87) Internationale Veröffentlichungsnummer: WO 2015/007780

(56) Entgegenhaltungen:
- EP-A2- 1 226 994
- DE-A1- 3 347 746
- US-A1- 2012 013 181
- CIPRIAN C. ANTALOAE, JAMES MARCO, AND NICHOLAS D. VAUGHAN: "Feasibility of High-Frequency Alternating CurrentPower for Motor Auxiliary Loads in Vehicles", IEEE TRANSACTIONS ON VEHICULAR TECHNOLOGY, VOL. 60, NO. 2, FEBRUARY 2011, 28. Februar 2011 (2011-02-28), Seiten 390-405, XP002737855,
- FU-SHENG TSAI, FRED C. Y. LEE: "High-Frequency AC Power Distribution in Space Station", IEEE TRANSACTIONS ON AEROSPACE AND ELECTRONIC SYSTEMS, Bd. 26, Nr. 2, 30. März 1990 (1990-03-30), Seiten 239-253, XP002737856,
- MICHAEL STEINER ET AL: "Medium frequency topology in railway applications", 2007 EUROPEAN CONFERENCE ON POWER ELECTRONICS AND APPLICATIONS, 31. Januar 2007 (2007-01-31), Seiten 1-10, XP055048811, DOI: 10.1109/EPE.2007.4417570

## Beschreibung

### TECHNISCHES GEBIET DER ERFINDUNG

Die Erfindung bezieht sich auf eine Schaltung zur Leistungsverteilung bei einem elektrischen Schienenfahrzeug, um aus einer mit einem Stromabnehmer abgegriffenen externen Spannung neben dem Traktionsantrieb auch noch ein oder mehrere Bordnetze mit Spannung zu versorgen, mit den Merkmalen des Oberbegriffs des unabhängigen Patentanspruchs 1.

Insbesondere kann es sich bei den Bordnetzen um ein Wechselspannungsnetz einerseits und ein Gleichspannungsnetz andererseits handeln. An das Gleichspannungsnetz kann eine Batterie als Überbrückungsspeicher angeschlossen sein, aus der zumindest Notfunktionen des Schienenfahrzeugs auch bei Entfall der externen Spannungsversorgung aufrechterhalten werden können. Tatsächlich treten bei elektrischen Schienenfahrzeugen relativ häufige Unterbrechungen der externen Spannungsversorgung auf, beispielsweise im Bereich von Teilnetztrennstellen.

### STAND DER TECHNIK

Aus SMA: MEE-NT SD "Innovative, redundante Energieversorgung für moderne S-Bahn" (siehe: http://www.sma-railway.com/fileadmin/fm-dam/SMA_Railway/Download/Prospekte/ Aktualisierung_AUG_12/Product_brochures/SMARTconverter_Coradia_Nordic_DE.pdf) ist ein elektrisches Schienenfahrzeug mit einer Schaltung zur Leistungsverteilung mit den Merkmalen des Oberbegriffs des Patentanspruchs 1 bekannt. Hier sind an einen Traktionszwischenkreis, an dem eine Gleichspannung im Bereich von 900 V bis 1.800 V anliegt, zwei DC/DC-Wandler angeschlossen, die eine zugweite DC-Schiene mit +/- 400 V speisen. An diese DC-Schiene sind parallel zueinander zwei DC/DC-Wandler angeschlossen, die eine zugweite DC-Schiene mit 110 V versorgen, sowie zwei dreiphasige DC/AC-Wandler, die eine zugweite AC-Schiene mit 3 x 230 V versorgen. An die zugweite DC-Schiene mit 110 V sind auch Batterien angeschlossen. Um mit Hilfe der Batterien einen Notbetrieb aufrechtzuerhalten, sind zwei dreiphasige Batteriewechselrichter vorgesehen, die eine zugweite Not-AC-Schiene mit 3 x 230 V versorgen. An diese zugweite Not-AC-Schiene sind die auch im Notbetrieb mit elektrischer Leistung zu versorgenden elektrischen Aggregate angeschlossen.

Ein Weiteres elektrisches Schienenfahrzeug mit einer Schaltung zur Leistungsverteilung mit den Merkmalen des Oberbegriffs des Patentanspruchs 1 ist aus der DE 33 47 746 A1 bekannt.

Aus C C Antaloae: Feasibility of High Frequency Alternating Current Power Distribution for the Automobile Auxiliary Electrical System. April 2011 (https://dspace.lib.cranfield.ac.uk/handle/1826/7692) ist eine Schaltung zur Leistungsverteilung für ein Fahrzeug bekannt, die die Merkmale des Oberbegriffs des unabhängigen Patentanspruchs 1 aufweist, außer dass sie nicht für ein Schienenfahrzeug mit einem Stromabnehmer vorgesehen ist.

Ein von der Anmelderin praktizierter Stand der Technik betrifft ein Bordnetzstromumrichtersystem für ein elektrisches Schienenfahrzeug. Ein an eine Eingangsgleichspannung angeschlossener Wandler umfasst einen eingangsseitigen Hochsetzsteller und einen Halbbrücken-DC/AC-Konverter. Der Halbbrücken-DC/AC-Konverter gibt eine Wechselspannung aus, die an eine Primärwicklung eines Mittelfrequenztransformators angelegt wird. Der Mittelfrequenztransformator weist zwei getrennte Sekundärwicklungen auf, wobei die über beiden abfallenden Wechselspannungen gleichgerichtet werden. Die eine gleichgerichtete Spannung steht an einem DC-Ausgang und einem Batterieausgang an. Die andere gleichgerichtete Spannung liegt an einem Gleichspannungszwischenkreis an und wird von einem dreiphasigen DC/AC-Konverter in einen dreiphasigen Wechselstrom umgerichtet. Wenn bei diesem Bordnetzstromumrichtersystem elektrische Leistung von der Batterie für einen Notbetrieb von Wechselspannungslasten zur Verfügung gestellt werden soll, geschieht dies über eine Not-AC-Schiene, an die die Batterie über einen separaten Batteriewechselrichter angeschlossen ist.

Die Verwendung von Resonanzwandlern, um die Schalter des Wandlers vorzugsweise sowohl strom- als auch spannungslos und entsprechend verlustarm schalten zu können, ist aus der EP 1 226 994 B1 auch für die Energieversorgung an Bord von elektrischen Schienenfahrzeugen bekannt.

Eine Schaltung für ein Netzgerät, das zwei unterschiedliche, voneinander galvanisch getrennte Gleichspannungen bereitstellt, ist aus der US 2010/046251 A1 bekannt. Eingangswechselspannung des Netzgeräts wird gleichgerichtet und lädt einen Zwischenkreiskondensator auf. Ein Halbbrücken-DC/AC-Konverter wandelt die Zwischenkreisgleichspannung in eine Wechselspannung über einem ausgangsseitigen Kondensator um. An den Kondensator sind zwei Serienresonanzkreise angeschlossen, die jeweils die Primärwicklung eines Transformators umfassen und deren Resonanzinduktivitäten von Streuinduktivitäten der Transformatoren bestimmt werden. Die sekundärseitigen Spannungen der Transformatoren werden in die gewünschten Ausgangsgleichspannungen gleichgerichtet und mit Glättungskondensatoren geglättet. Die Ausgangsgleichspannungen sind bei dem bekannten Schaltnetzgerät nicht nur von dem Wickelverhältnis der Transformatoren, sondern auch von den Resonanzkapazitäten und den Resonanzinduktivitäten der beiden Serienresonanzkreise abhängig und insbesondere davon, mit welcher Frequenz und mit welchem Tastverhältnis die Schalter des Halbbrücken-DC/AC-Konverters geschlossen werden. Dabei erfolgt ein geregelter Betrieb zum Erreichen vorgegebener Spannungen. Das bekannte Schaltnetzteil ermöglicht ausschließlich einen Leistungsfluss von der Eingangswechselspannung zu den Ausgangsgleichspannungen.

Eine weitere Schaltung zur Leistungsverteilung mit einem zweipoligen AC-Leistungsbus und mindestens drei an den AC-Leistungsbus angeschlossenen Wandlern, wobei mindestens zwei der mindestens drei Wandler jeweils einen an die beiden Pole des Leistungsbusses angeschlossenen Serienresonanzkreis aufweisen, ist aus der EP 0 778 659 B1 bekannt. Hier ist an den Ausgang eines eingangsseitig aus einer Gleichspannungsquelle gespeisten Halbbrücken-DC/AC-Konverters eine Mehrzahl von Serienresonanzkreisen angeschlossen, die jeweils die primärseitige Wicklung eines Transformators umfassen, dessen sekundärseitige Wechselspannung gleichgerichtet wird. Zur individuellen Regelung der damit erzeugten Gleichspannungen werden die Resonanzinduktivitäten in den einzelnen Serienresonanzkreisen variiert. Der Halbbrücken-DC/AC-Konverter wird mit fester Frequenz betrieben. Auch diese bekannte Schaltung ermöglicht ausschließlich einen Leistungsfluss in einer Richtung über die Transformatoren.

Aus Fu-Sheng Tsai, Fred C. Y. Lee: High-Frequency AC Power Distribution in Space Station. IEEE Transactions on Aerospace and Electronic Systems, Vol. 26, No. 2, March 1990, S. 239-253 ist eine hochfrequente Leistungsverteilung für eine Raumstation bekannt. Hier wird ein Wechselspannungsbus über Wechselrichter und Transformatoren aus Gleichspannungsquellen gespeist. Über weitere Transformatoren sind Lasten an den Wechselspannungsbus angeschlossen. Dabei können einzelne Lasten auch bidirektional ausgebildet und über einen bidirektionalen Wechselrichter und den jeweiligen Transformator an den Wechselspannungsbus angeschlossen sein. Beim Einspeisen von elektrischer Leistung in den Wechselspannungsbus werden die jeweiligen Wechselrichter resonant betrieben und weisen dazu jeweils einen Serienresonanzkreis auf.

Aus Irvin G. Hansen: Advantage of Resonant Power Conversion in Aerospace Applications. NASA Technical Memorandum 83399, M a y 1983 (http://ntrs.nasa.gov/archive/nasa/casi.ntrs.nasa.gov/19830019723.pdf) ist ebenfalls ein Wechselspannungsbus bekannt, an den bidirektionale Wechselrichter jeweils über einen Transformator angeschlossen sind. Die Wechselrichter weisen Serienresonanzkreise aus einem mit der dem Wechselspannungsbus abgekehrten Sekundärseite des Transformators in Reihe geschalteten Kondensator auf.

### AUFGABE DER ERFINDUNG

Der Erfindung liegt die Aufgabe zugrunde, eine Schaltung zur Leistungsverteilung mit den Merkmalen des Oberbegriffs des unabhängigen Patentanspruchs 1 aufzuzeigen, die zusätzliche Leistungsflussrichtungen mit geringen elektrischen Verlusten ermöglicht.

### LÖSUNG

Die Aufgabe der Erfindung wird durch eine Schaltung zur Leistungsumverteilung mit den Merkmalen des unabhängigen Patentanspruchs 1 gelöst. Die abhängigen Patentansprüche 2 bis 10 sind auf bevorzugte Ausführungsformen der erfindungsgemäßen Schaltung gerichtet. Die abhängigen Patentansprüche 11 bis 13 betreffen bevorzugte Ausführungsformen eines Schienenfahrzeugs mit einer erfindungsgemäßen Schaltung zur Leistungsverteilung.

### BESCHREIBUNG DER ERFINDUNG

Die erfindungsgemäße Schaltung zur Leistungsverteilung bei einem elektrischen Schienenfahrzeug, um aus einer mit einem Stromabnehmer abgegriffenen externen Spannung neben dem Traktionsantrieb auch noch ein oder mehrere Bordnetze mit Spannung zu versorgen, weist einen zweipoligen AC-Leistungsbus und mindestens drei an den AC-Leistungsbus angeschlossene Wandler auf. Dabei ist einer der Wandler unidirektional und dazu ausgebildet, dem AC-Leistungsbus elektrische Leistung zuzuführen, und an seinem dem AC-Leistungsbus abgekehrten DC-Eingang an einen Gleichspannungszwischenkreis angeschlossen, der über den Stromabnehmer gespeist wird. Alle der mindestens drei an den AC-Leistungsbus angeschlossenen Wandler außer dem einen der Wandler weisen jeweils einen Transformator und einen an die beiden Pole des Leistungsbusses angeschlossenen Serienresonanzkreis auf. Mindestens einer dieser einen Serienresonanzkreis aufweisenden Wandler ist ein bidirektionaler Wandler. Der aus der mit dem Stromabnehmer abgegriffenen externen Spannung versorgte Wandler, über den dem AC-Leistungsbus die größte Leistung zugeführt wird, weist keinen eigenen, d. h. nur ihm zugeordneten Serienresonanzkreis auf. Entsprechend müssen keine Bauteile für einen solchen Serienresonanzkreis auf diese große zugeführte Leistung abgestimmt sein. Die Serienresonanzkreise sind nur für alle anderen Wandler vorgesehen. Von diesen ist mindestens einer ein bidirektionaler Wandler, mit dem dem AC-Leistungsbus ebenfalls elektrische Leistung zugeführt werden kann.

Jeder Serienresonanzkreis weist einen mit der dem AC-Leistungsbus zugewandten Primärseite des jeweiligen Transformators in Reihe geschalteten Kondensator auf. Dieser Kondensator kann zumindest dann, wenn auf dem AC-Leistungsbus eine höhere Spannung herrscht als auf der jeweiligen Sekundärseite der Transformatoren, eine kleinere Kapazität aufweisen als auf jener Sekundärseite. Die erfindungsgemäße Schaltung benötigt daher nur vergleichsweise wenige und kostengünstige Bauteile, um die Aufgabe der Erfindung zu lösen.

Bei der erfindungsgemäßen Schaltung sind die Wandler über den AC-Leistungsbus sternförmig miteinander verbunden. Die gesamte zu verteilende Leistung wird über den AC-Leistungsbus geführt.

Die bei der erfindungsgemäßen Schaltung an den Leistungsbus angeschlossenen Wandler werden in ihren Eigenschaften nicht nur durch ihren eigenen Aufbau bestimmt. Vielmehr ergeben sich ihre Eigenschaften auch durch ihre Verschaltung über den AC-Leistungsbus mit den anderen Wandlern, insbesondere mit deren Serienresonanzkreisen. Konkret kann auch der unidirektionale Wandler, der dazu ausgebildet ist, dem AC-Leistungsbus elektrische Leistung zuzuführen, und der keinen eigenen Serienresonanzkreis aufweist, unter Nutzung der Serienresonanzkreise der anderen an den AC-Leistungsbus angeschlossenen Wandler als Resonanzwandler betrieben werden. Das bedeutet, dass auch seine Schalter vorzugsweise sowohl stromlos als auch spannungslos, insbesondere aber zumindest stromlos, und damit besonders verlustarm geschaltet werden.

Mit einem bidirektionalen Wandler kann elektrische Leistung sowohl dem AC-Leistungsbus zugeführt werden als auch von dem AC-Leistungsbus abgeführt werden. Bei der erfindungsgemäßen Schaltung ist mindestens ein solcher bidirektionaler Wandler vorgesehen. Auch mehrere der an den AC-Leistungsbus angeschlossenen Wandler können als bidirektionale Wandler ausgebildet sein. Insbesondere ist es möglich, dass alle an den AC-Leistungsbus angeschlossenen Wandler bidirektionale Wandler sind.

Bei der erfindungsgemäßen Schaltung weisen alle an den Leistungsbus angeschlossenen Serienresonanzkreise vorzugsweise gleiche Resonanzkapazitäten und gleiche Resonanzinduktivitäten auf. Damit haben alle Serienresonanzkreise gleiche Resonanzfrequenzen. Gleich bedeutet in diesem Zusammenhang zwar nicht, dass die Resonanzkapazitäten und die Resonanzinduktivitäten und in der Folge auch die Resonanzfrequenzen vollkommen identisch sein müssen. Es reicht vielmehr aus, wenn sie im Wesentlichen, d. h. im Rahmen üblicher Bauteiltoleranzen von maximal +/- 10% des Nennwertes, übereinstimmen, damit die erfindungsgemäße Schaltung eine einheitliche Resonanzfrequenz aufweist, die für alle Serienresonanzkreise und deren Gesamtheit gilt. Dabei ist zu berücksichtigen, dass Resonanzwandler regelmäßig nicht exakt bei der Resonanzfrequenz der für sie wirksamen Resonanzkreise betrieben werden, sondern bei einer davon um einige Prozentpunkte abweichenden, typischerweise niedrigeren Frequenz. So machen sich leichte Unterschiede der Resonanzfrequenzen der einzelnen Serienresonanzkreise aufgrund von Bauteiltoleranzen, solange diese klein bleiben, nicht in relevanter Form negativ bemerkbar. Eine reine Abstimmung der Serienresonanzkreise nur auf gleiche Resonanzfrequenzen, d. h. gleiche Produkte der Resonanzkapazitäten und der Resonanzinduktivitäten reicht bei der erfindungsgemäßen Schaltung für eine in jeder möglichen Leistungsflussrichtung gleiche Resonanzfrequenz aber nicht unbedingt aus. Hingegen wird eine in jeder möglichen Leistungsflussrichtung gleiche Resonanzfrequenz sicher erreicht, wenn alle Komponenten der Serienresonanzkreise, d. h. insbesondere die Resonanzkapazitäten und die Resonanzinduktivitäten zumindest im Wesentlichen gleich groß sind.

Der oder die bidirektionalen Wandlern der erfindungsgemäßen Schaltung können eine Halbbrücke oder eine Vollbrücke mit Halbleiterschaltern aufweisen. Derartige Wandler erlauben es besonders einfach, elektrische Leistung von dem und auf den zweipoligen AC-Leistungsbus zu übertragen. Dabei können sie aufgrund von Bodydioden der Halbleiterschalter oder zusätzlicher antiparalleler Dioden als passive Gleichrichter in der Leistungsflussrichtung von dem AC-Leistungsbus eingesetzt werden. Die Halbleiterschalter können aber auch im Sinne eines Synchrongleichrichters angesteuert werden, um mit dem jeweiligen bidirektionalen Wandler Leistung von dem AC-Leistungsbus abzuführen.

Für die Flussrichtung der elektrischen Leistung von dem bzw. zu dem AC-Leistungsbus ist die an dem dem AC-Leistungsbus abgekehrten Eingang oder Ausgang der Vollbrücke anliegende Spannung entscheidend. Um diese zu variieren, kann der jeweilige bidirektionale Wandler einen DC/DC-Wandler zur Spannungsanpassung aufweisen.

Bei der erfindungsgemäßen Schaltung weist jeder der Wandler, mit dem elektrische Leistung von dem AC-Leistungsbus abführbar ist, einen der Serienresonanzkreise auf. Entsprechend ist ein solcher Serienresonanzkreis auch bei dem mindestens einem und jedem gegebenenfalls vorhandenen weiteren bidirektionalen Wandler vorhanden. Die Serienresonanzkreise stellen die einheitliche Resonanzfrequenz der gesamten Schaltung bei einem Leistungsfluss von dem AC-Leistungsbus zu dem jeweiligen Wandler sicher.

Wie bereits angedeutet wurde, wird bei der erfindungsgemäßen Schaltung vorzugsweise jeder der Wandler, mit dem dem AC-Leistungsbus elektrische Leistung zugeführt wird, als Resonanzwandler betrieben. Da die erfindungsgemäße Schaltung eine einheitliche Resonanzfrequenz aufweist, die für alle Serienresonanzkreise und deren Gesamtheit gilt, können alle Wandler, mit denen dem AC-Leistungsbus elektrische Leistung zugeführt wird, mit derselben Frequenz getaktet werden, um sie resonant zu betreiben. Wenn dem AC-Leistungsbus mit mehreren Wandlern zugleich elektrische Leistung zugeführt werden soll, sind diese synchron zu takten. Entsprechend ist, wenn eine Einspeisung von elektrischer Leistung von mehreren Quellen vorgesehen ist, eine übergeordnete Steuerung vorzusehen, die dieses synchrone Takten der entsprechenden Wandler gewährleistet.

Bei der erfindungsgemäßen Schaltung führen die Transformatoren zu einer galvanischen Entkopplung aller an den AC-Leistungsbus angeschlossenen Wandler. Die Streuinduktivität der Transformatoren kann überdies dazu genutzt werden, die Resonanzinduktivität des jeweiligen Serienresonanzkreises ganz oder teilweise auszubilden.

Indem bei der erfindungsgemäßen Schaltung nur ein Wandler keinen Transformator aufweist, sind die dem AC-Leistungsbus abgekehrten Eingänge bzw. Ausgänge aller Wandler galvanisch voneinander getrennt.

Bei der erfindungsgemäßen Schaltung kann mindestens einer der Wandler einen dem AC-Leistungsbus abgekehrten AC-Ausgang aufweisen. D. h., dieser Wandler kann dazu vorgesehen sein, eine Wechselspannung bereitzustellen. Auch wenn grundsätzlich dieser Wandler die Funktion hat, die Wechselspannung bereitzustellen, kann an dem AC-Ausgang zusätzlich ein Anschluss für eine Wechselspannungsquelle vorgesehen sein. Wenn dann der Wandler als bidirektionaler Wandler ausgebildet ist, kann elektrische Leistung von dieser externen Wechselspannungsquelle auf den AC-Leistungsbus übertragen und von dort mit anderen Wandlern abgeführt werden.

Bei der erfindungsgemäßen Schaltung kann mindestens einer der Wandler auch einen dem AC-Leistungsbus abgekehrten DC-Ausgang aufweisen. An diesem DC-Ausgang kann er eine Gleichspannung zur Versorgung von Gleichspannungslasten bereitstellen. Zugleich kann an den DC-Ausgang eine Batterie angeschlossen sein. Dabei ist ein direkter Anschluss der Batterie möglich, d. h. ohne zusätzlichen Batteriewandler. Dann übernimmt der Wandler mit dem DC-Ausgang die Funktion eines Batteriewandlers. Wenn der Wandler bidirektional ausgebildet ist, kann elektrische Leistung von der Batterie zurück auf den AC-Leistungsbus geführt und so auch anderen Wandlern und daran angeschlossenen Lasten zur Verfügung gestellt werden. So können, wenn einer der anderen Wandler eine Wechselspannung an seinem Ausgang bereitstellt, aus der Batterie beispielsweise auch Wechselspannungslasten versorgt werden, ohne dass es dazu eines speziellen Batterieinverters bedarf.

Einer der Wandler kann auch einen dem AC-Leistungsbus abgekehrten DC-Eingang aufweisen und dabei als unidirektionaler Wandler ausgebildet sein, um dem AC-Leistungsbus immer nur elektrische Leistung zuzuführen. Ein solcher unidirektionaler Wandler benötigt keinen eigenen Resonanzkreis, sondern kann unter Ausnutzung der Resonanzkreise der Wandler, mit denen elektrische Leistung von dem AC-Leistungsbus entnehmbar ist, als Resonanzwandler ausgeführt sein, der auf die einheitliche Resonanzfrequenz der gesamten Schaltung abgestimmt ist.

Bei einem erfindungsgemäßen Schienenfahrzeug, das eine erfindungsgemäße Schaltung zur Leistungsverteilung aufweist, ist der Wandler, der unidirektional und dazu ausgebildet ist, dem AC-Leistungsbus elektrische Leistung zuzuführen, an seinem dem AC-Leistungsbus abgekehrten DC-Eingang an die über den Stromabnehmer zugeführte Versorgungsspannung angeschlossen. Dabei kann er einen Halbbrücken- oder einen Vollbrücken-DC/AC-Konverter aufweisen, um dem AC-Leistungsbus die elektrische Leistung zuzuführen. Diesem Halbbrücken-DC/AC-Konverter kann zur Spannungsanpassung ein DC/DC-Konverter vorgeschaltet sein. Es versteht sich, dass der DC/AC-Konverter bei einem erfindungsgemäßen Schienenfahrzeug resonant betrieben wird, d. h. als Resonanzwandler, der eine Wechselspannung in der Nähe der gemeinsamen Resonanzfrequenz aller vorhandenen Serienresonanzkreise erzeugt. Da der DC/AC-Konverter nur unidirektional betrieben wird, braucht er dennoch keinen eigenen Serienresonanzkreis aufzuweisen, sondern für seinen resonanten Betrieb können die Serienresonanzkreise der anderen Wandler genutzt werden. Die Resonanzfrequenz bleibt auch die gleiche wie bei den anderen Serienresonanzkreisen, obwohl kein Resonanzelement die Halbbrückenkondensatoren des DC/AC-Konverters entkoppelt.

Bei einem erfindungsgemäßen Schienenfahrzeug kann der mindestens eine bidirektionale Wandler an seinem dem AC-Leistungsbus abgekehrten DC-Ausgang eine Gleichspannung bereitstellen und zugleich an eine Batterie angeschlossen sein. Eine Batterie kann auch an jeden Gleichspannungszwischenkreis des mindestens einen bidirektionalen Wandlers angeschlossen sein. Bei der Batterie kann es sich um einen elektrochemischen und/oder elektrostatischen Energiespeicher und damit auch um einen oder mehrere sogenannte Super- oder Ultra-Caps handeln. Bei ausgefallener externer Leistungsversorgung kann die Batterie über den AC-Leistungsbus für einen Notbetrieb grundsätzlich aller Lasten genutzt werden.

Bei einem erfindungsgemäßen Schienenfahrzeug kann dann, wenn zwei bidirektionale Wandler vorgesehen sind, der eine an seinem dem AC-Leistungsbus abgekehrten AC-Ausgang eine Wechselspannung bereitstellen und an eine externe, bspw. stationäre Wechselspannungsquelle anschließbar sein. Diese externe Wechselspannungsquelle, wie sie beispielsweise in Reparaturhallen für Schienenfahrzeuge zur Verfügung steht, kann über den AC-Leistungsbus alle Lasten des Schienenfahrzeugs versorgen. So kann auch eine Batterie aufgeladen werden, die über einen anderen Wandler an den AC-Leistungsbus angeschlossen ist. Grundsätzlich ist es auch möglich, über den AC-Leistungsbus einen Traktionsantrieb des Schienenfahrzeugs aus der externen Wechselspannungsquelle zu versorgen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform einer erfindungsgemäßen Schaltung, die für ein Schienenfahrzeug vorgesehen ist; und
- **Fig. 2**: zeigt eine zweite Ausführungsform der erfindungsgemäßen Schaltung, die ebenfalls für ein Schienenfahrzeug vorgesehen ist, wobei einige Komponenten der Schaltung mit höherem Detaillierungsgrad dargestellt sind als in Fig. 1.

### FIGURENBESCHREIBUNG

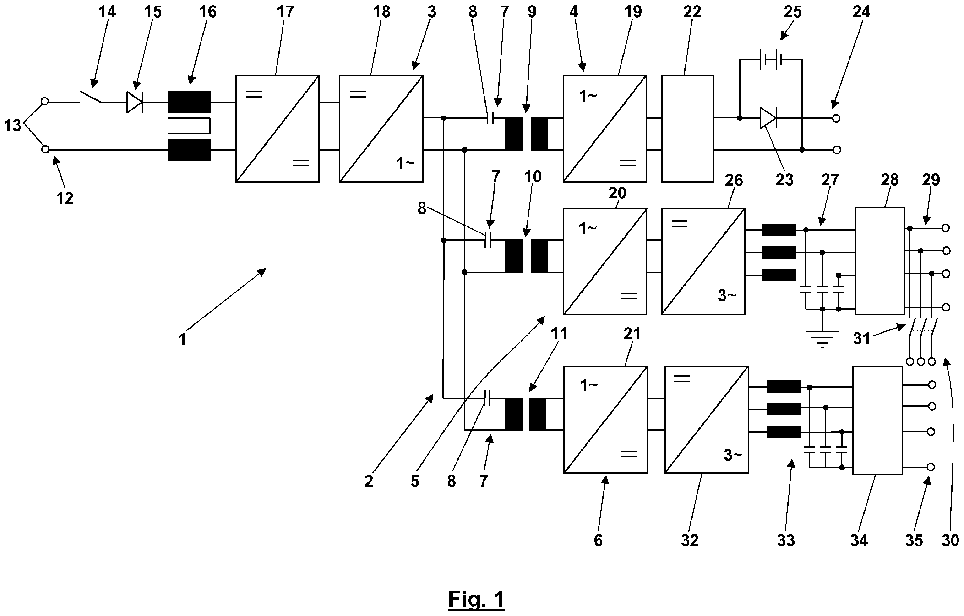

Die in **Fig. 1** dargestellte Schaltung 1 weist einen zentralen zweipoligen AC-Leistungsbus 2 auf. An diesen AC-Leistungsbus 2 sind verschiedene Wandler 3 bis 6 angeschlossen. Von diesen Wandlern 3 bis 6 weisen die Wandler 4 bis 6 jeweils einen an den AC-Leistungsbus 2 angeschlossen Serienresonanzkreis 7 auf, wobei alle Serienresonanzkreise 7 gleiche Resonanzkapazitäten und gleiche Resonanzinduktivitäten aufweisen. Die Resonanzkapazitäten sind hier durch jeweils einen Kondensator 8 wiedergegeben. Die Resonanzinduktivitäten sind die Streuinduktivitäten von Transformatoren 9 bis 11 der Wandler 4 bis 6, die insgesamt gleich sein können, aber auch unterschiedliche Wicklungsverhältnisse aufweisen können.

Der Wandler 3 ist ohne Serienresonanzkreis 7 an den AC-Leistungsbus angeschlossen. Im Gegensatz zu den anderen Wandlern 4 bis 6 ist er nicht vorgesehen, elektrische Leistung von dem AC-Leistungsbus 2 zu nehmen, er ist vielmehr ausschließlich vorgesehen, dem Leistungsbus 2 elektrische Leistung zuzuführen. Entsprechend weist er an seinem dem AC-Leistungsbus 2 abgekehrten DC-Eingang 12 einen Anschluss 13 an eine Spannungsquelle, hier eine Gleichspannungsquelle auf. Im Falle der Verwendung der Schaltung 1 bei einem elektrischen Schienenfahrzeug kann es sich bei der Gleichspannungsquelle um den Gleichspannungszwischenkreis eines Traktionsantriebs handeln, der über einen Stromabnehmer aus einer Oberleitung oder einer Stromschiene gespeist wird.

Hinter dem Anschluss 13 sind ein Schalter 14, eine Diode 15 und eine gekoppelte Drossel 16 vorgesehen. Hieran schließt sich als Teil des Wandlers 3 ein Hochsetzsteller 17 an, der zur Spannungsanpassung dient und auf den ein DC/AC-Konverter 18 folgt. Bei diesem DC/AC-Konverter 18 kann es sich insbesondere um einen Halbbrücken-DC/AC-Konverter handeln. Durch entsprechende Ansteuerung von Schaltern des DC/AC-Konverters 18 wird der Wandler 3 resonant betrieben, wobei die Serienresonanzkreise 7 der anderen Wandler 4 bis 6 genutzt werden, um die Schalter des DC/AC-Konverters 18 im Idealfall stromlos und entsprechend mit geringen Verlusten zu schalten. Die wirksame Resonanzfrequenz ist dabei die Resonanzfrequenz jedes der parallel geschalteten Serienresonanzkreise 7. Es versteht sich, dass der DC/AC-Konverter 18 des Wandlers 3 nicht genau bei der Resonanzfrequenz der Serienresonanzkreise 7, sondern typischerweise einer etwas geringeren Frequenz betrieben wird, wie dies bei Resonanzwandlern üblich ist.

Über die an den AC-Leistungsbus 2 angeschlossenen Serienresonanzkreise 7 gelangt elektrische Leistung in den Bereich jedes der Wandler 4 bis 6. Hier kann die elektrische Leistung auf der Sekundärseite des jeweiligen Transformators 9, 10 oder 11 abgegriffen werden. Dazu ist jeweils ein AC/DC-Konverter 19, 20 bzw. 21 vorgesehen, der bei einer Leistungsflussrichtung von dem AC-Leistungsbus 2 den auf der Sekundärseite des jeweiligen Transformators 9, 10 oder 11 fließenden Wechselstrom gleichrichtet und aufintegriert, um eine Gleichspannung bereitzustellen. Bei dem Wandler 4 wird diese Gleichspannung mit einem Filter 22 zur Herstellung der elektromagnetischen Verträglichkeit gefiltert und dann über eine Diode 23 an einem DC-Ausgang 24 bereitgestellt. Die Diode ist grundsätzlich optional. Sie ist üblicherweise vorhanden, damit zwei gleichartige DC Spannungsquellen parallel geschaltet werden können. Sie verhindert dann, dass die dem DC-Ausgang 24 zugeordnete Batterie von einer anderen DC-Spannungsquelle als der eigenen geladen wird. Der Wandler 4 ist ausgangsseitig zudem an eine Batterie 25 angeschlossen, und er wird als Batteriewandler betrieben. Dies schließt ein, dass er elektrische Leistung von der Batterie zurück auf den AC-Leistungsbus führen kann. Dazu ist der AC/DC-Konverter 19 des Wandlers 4 und damit auch der Wandler 4 selbst bidirektional ausgebildet.

Der Wandler 5 weist im Anschluss an seinen AC/DC-Konverter 20 einen dreiphasigen DC/AC-Konverter 26 auf. Hieran schließen sich ein Sinusfilter 27 von grundsätzlich bekanntem Aufbau und ein Filter 28 für die elektromagnetische Verträglichkeit an. Der gefilterte dreiphasige Wechselstrom wird an einem Ausgang 29 ausgegeben. Über einen Schalter 31 ist dem Ausgang 29 ein zusätzlicher Anschluss 30 zuschaltbar. Der Anschluss 30 ist für eine externe, bspw. eine stationäre Wechselspannungsquelle zur Versorgung des Schienenfahrzeugs z. B. in einer Wartungshalle vorgesehen. Bei bidirektionaler Ausbildung des Wandlers 5, d. h. hier sowohl des AC/DC-Konverters 20 als auch des DC/AC-Konverters 26, kann elektrische Leistung von der externen Wechselspannungsquelle auf den AC-Leistungsbus 2 überführt werden. Von dort kann sie mit dem Wandler 4 zum Laden der Batterie 25 oder auch zum Versorgen anderer an seinen DC-Anschluss 24 angeschlossener DC-Lasten verwendet werden. Umgekehrt kann Leistung aus der Batterie 25 über den Wandler 4, den AC-Leistungsbus 2, den Wandler 5 zur Versorgung von AC-Lasten verwendet werden, die an den Anschluss 29 angeschlossen sind. In letzterem Fall muss der Schalter 31 geöffnet sein, bzw. es darf keine externe Wechselspannungsquelle an den Anschluss 30 angeschlossen sein.

In Fig. 1 ist noch der weitere, grundsätzlich optionale Wandler 6 dargestellt, der hier wie der Wandler 5 neben dem AC/DC-Konverter 21 einen DC/AC-Konverter 32, einen Sinusfilter 33 und einen Filter 34 für elektromagnetische Verträglichkeit vor seinem AC-Ausgang 35 aufweist. Dieser AC-Ausgang 35 kann speziell für die Versorgung solcher Wechselspannungslasten vorgesehen sein, die auch beim Ausfall der Einspeisung von Leistung auf den AC-Leistungsbus 2 über den Wandler 3, und ohne dass eine externe Wechselspannungsquelle an den Anschluss 30 angeschlossen ist, versorgt werden sollten. Damit wird eine Not-AC-Schiene ausgebildet, die zur alternativen Leistungsversorgung dieser wichtigen Wechselspannungslasten vorgesehen sein kann. Über eine echte Not-AC-Schiene werden die wichtigsten Wechselspannungslasten nur im Notfall über den Wandler 6 versorgt, während sie im Regelfall wie alle anderen Wechselspannungslasten über den Wandler 5 versorgt werden.

In einer anderen Ausführungsform der Schaltung 1 werden nur die wichtigsten Wechselspannungslasten über den Wandler 5 oder den Wandler 6 versorgt, während der andere Wandler 6 oder 5 die weniger wichtigen Lasten versorgt. Dieser andere Wandler 6 oder 5 wird deaktiviert, wenn die Leistung auf dem AC-Leistungsbus 2 beschränkt ist.

Statt des zusätzlichen Wandlers 6 für die Notversorgung spezieller AC-Lasten können aber auch alle Wechselspannungslasten immer nur über den Wandler 5 mit Leistung versorgt werden, wobei im Notfall, d. h. bei begrenztem Leistungsangebot auf dem AC-Leistungsbus 2, alle nicht unbedingt benötigten AC-Lasten abgeschaltet werden.

Je nach Anwendungsfall kann es ausreichen, den Wandler 6 unidirektional für einen Leistungsfluss von dem AC-Leistungsbus 2 weg auszubilden. Dies gilt z. B. dann, wenn der zusätzliche Wandler 6 zur Versorgung von Lasten mit anderer Spannungshöhe und anderer Frequenz als der Wechselspannung am AC-Ausgang 29 verwendet wird.

Auch wenn mit einem der Wandler 4 und 5 elektrische Leistung in den AC-Leistungsbus 2 eingespeist wird, wird der jeweilige in Rückwärtsrichtung betriebene AC/DC-Konverter 19 bzw. 20 nahe der Resonanzfrequenz der Serienresonanzkreise 7 betrieben. D. h. bei der Schaltung 1 gemäß Fig. 1 werden auch Schaltverluste bei jedem Leistungstransfer zwischen den Wandlern 4 bis 6 durch resonantes Schalten minimiert. Die Ansteuerung aller Wandler 3 bis 5, mit denen Leistung auf den AC-Leistungsbus 2 gebracht werden kann, erfolgt immer mit derselben Frequenz. Wenn mehrere der Wandler 3 bis 5 zugleich Leistung auf den AC-Leistungsbus 2 übertragen sollen, sind diese Wandler synchron anzusteuern.

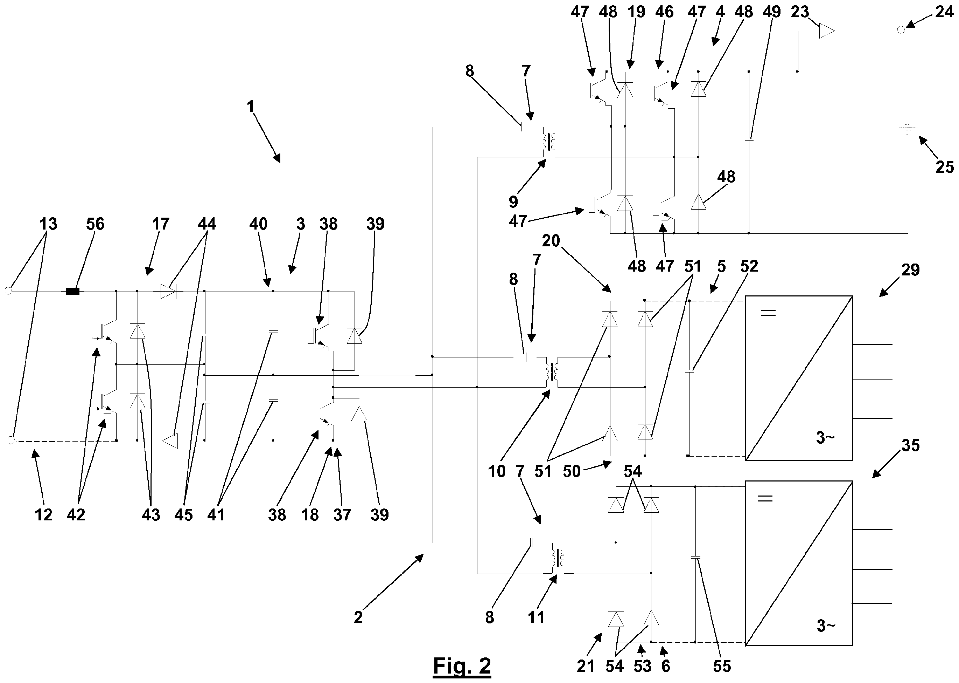

Die Ausführungsform der Schaltung 1 gemäß **Fig. 2** ist bezüglich der Ausgänge 24, 29 und 35 der Wandler 4 bis 6 weniger detailliert als Fig. 1 wiedergegeben. Detaillierter sind jedoch die Konverter 18 bis 21 dargestellt. Außerdem ist hier der Wandler 5 nicht bidirektional ausgebildet.

Im Einzelnen umfasst der Halbbrücken-DC/AC-Konverter 18 des Wandlers 3 eine Halbbrücke 37 mit Halbleiterschaltern 38 und antiparallelen Dioden 39. Eine parallele passive Halbbrücke 40 für den Stromrückfluss umfasst zwei Kondensatoren 41. Der Hochsetzsteller 17 ist hier mit einer Hochsetzstellerdrossel 56, zwei Halbleiterschaltern 42 mit antiparallelen Dioden 43, zwei Dioden 44 und zwei Kondensatoren 45 ausgebildet. Je nach Ausprägung der Taktfrequenz beim Ansteuern der Halbleiterschaltern 42 kann der Mittelpunkt der Kondensatoren 45 mit den Kondensatoren 41 verbunden sein.

Der AC/DC-Konverter 19 des Wandlers 4 weist eine Vollbrücke 46 mit vier Halbleiterschaltern 47 und zugehörigen antiparallelen Dioden 48 sowie einen ausgangsseitigen Glättungskondensator 49 auf. Der hier nur unidirektionale AC/DC-Konverter des Wandlers 5 weist eine Vollbrücke 50 aus Dioden 51 und einen ausgangsseitigen Glättungskondensator 52 auf. Entsprechend ist der AC/DC-Konverter 21 des Wandlers 6 mit einer Vollbrücke 53 aus Dioden 54 und mit einem ausgangsseitigen Glättungskondensator 55 aufgebaut.

Bei der Schaltung 1 kann die gesamte zu einem Zeitpunkt zur Verfügung stehende Leistung immer über den AC-Leistungsbus 2 geführt werden, ohne dass hierbei wegen des resonanten Betriebs aller aktiv geschalteten Konverter 19 bis 21 höhere Schaltverluste anfallen. Um die Schaltverluste auch beim Betrieb der Konverter als Gleichrichter zu reduzieren, können diese, soweit geeignete Schalter vorhanden sind, jeweils auch aktiv als Synchrongleichrichter betrieben werden.

### BEZUGSZEICHENLISTE

- 1: Schaltung
- 2: AC-Leistungsbus
- 3: Wandler
- 4: Wandler
- 5: Wandler
- 6: Wandler
- 7: Serienresonanzkreis
- 8: Kondensator
- 9: Transformator
- 10: Transformator
- 11: Transformator
- 12: DC-Eingang
- 13: Anschluss
- 14: Schalter
- 15: Diode
- 16: Drossel
- 17: Hochsetzsteller
- 18: DC/AC-Konverter
- 19: AC/DC-Konverter
- 20: AC/DC-Konverter
- 21: AC/DC-Konverter
- 22: Filter
- 23: Diode
- 24: DC-Ausgang
- 25: Batterie
- 26: DC/AC-Konverter
- 27: Sinusfilter
- 28: Filter
- 29: AC-Ausgang
- 30: Anschluss
- 31: Schalter
- 32: DC/AC-Konverter
- 33: Sinusfilter
- 34: Filter
- 35: AC-Ausgang
- 36: Spule
- 37: Halbbrücke
- 38: Halbleiterschalter
- 39: Diode
- 40: Halbbrücke
- 41: Kondensator
- 42: Halbleiterschalter
- 43: Diode
- 44: Diode
- 45: Kondensator
- 46: Vollbrücke
- 47: Halbleiterschalter
- 48: Diode
- 49: Glättungskondensator
- 50: Vollbrücke
- 51: Diode
- 52: Glättungskondensator
- 53: Vollbrücke
- 54: Diode
- 55: Glättungskondensator
- 56: Hochsetzstellerdrossel

## Patentansprüche

1. Schaltung (1) zur Leistungsverteilung bei einem elektrischen Schienenfahrzeug, um aus einer mit einem Stromabnehmer abgegriffenen externen Spannung neben dem Traktionsantrieb auch noch ein oder mehrere Bordnetze mit Spannung zu versorgen, mit
- einem zweipoligen AC-Leistungsbus (2) und
- mindestens drei an den AC-Leistungsbus angeschlossenen Wandlern (3 bis 6);
- wobei einer der Wandler (3)
- unidirektional und dazu ausgebildet ist, dem AC-Leistungsbus (2) elektrische Leistung zuzuführen, und
- an seinem dem AC-Leistungsbus (2) abgekehrten DC-Eingang (12) an einen Gleichspannungszwischenkreis angeschlossen ist, der über den Stromabnehmer gespeist wird, und
- wobei alle der mindestens drei an den AC-Leistungsbus angeschlossenen Wandler (4 bis 6) außer dem einen der Wandler (3) jeweils einen Transformator (9 bis 11) aufweisen, **dadurch gekennzeichnet,**
- **dass** alle der mindestens drei an den AC-Leistungsbus angeschlossenen Wandler (4 bis 6) außer dem einen der Wandler (3) jeweils einen an die beiden Pole des Leistungsbusses angeschlossenen Serienresonanzkreis (7) aufweisen;
- **dass** mindestens einer der einen Serienresonanzkreis (7) aufweisenden Wandler (4 bis 6) ein bidirektionaler Wandler ist und
- **dass** jeder Serienresonanzkreis (7) einen mit der Primärseite des jeweiligen Transformators (9 bis 11) in Reihe geschalteten Kondensator (8) aufweist.

2. Schaltung (1) nach Anspruch 1, **dadurch gekennzeichnet, dass** alle an den Leistungsbus (2) angeschlossenen Serienresonanzkreise (7) gleiche Resonanzkapazitäten und gleiche Resonanzinduktivitäten aufweisen.

3. Schaltung (1) nach einem der vorhergehenden Ansprüche, **dadurch gekennzeichnet, dass** mindestens zwei der einen Serienresonanzkreis (7) aufweisenden Wandler (3 bis 6) bidirektionale Wandler sind.

4. Schaltung (1) nach einem der vorhergehenden Ansprüche, **dadurch gekennzeichnet, dass** jeder der Wandler (3 bis 5), mit dem dem AC-Leistungsbus (2) elektrische Leistung zuführbar ist, als Resonanzwandler betrieben wird.

5. Schaltung (1) nach einem der vorhergehenden Ansprüche, **dadurch gekennzeichnet, dass** einer der Wandler (5, 6) einen dem AC-Leistungsbus (2) abgekehrten AC-Ausgang (29, 35) aufweist.

6. Schaltung (1) nach Anspruch 5, **dadurch gekennzeichnet, dass** der Wandler (5), der den dem AC-Leistungsbus (2) abgekehrten AC-Ausgang (29) aufweist, einen Anschluss (30) für eine Wechselspannungsquelle aufweist.

7. Schaltung (1) nach einem der vorhergehenden Ansprüche, **dadurch gekennzeichnet, dass** einer der Wandler (4) einen dem AC-Leistungsbus (2) abgekehrten DC-Ausgang (24) aufweist.

8. Schaltung (1) nach einem der vorhergehenden Ansprüche, **dadurch gekennzeichnet, dass** an einen dem AC-Leistungsbus (2) abgekehrten Ausgang (24) des mindestens einen bidirektionalen Wandlers (4) eine Batterie (25) angeschlossen ist.

9. Schaltung (1) nach einem der vorhergehenden Ansprüche, **dadurch gekennzeichnet, dass** einer der Wandler (3) einen dem AC-Leistungsbus (2) abgekehrten DC-Eingang (12) aufweist.

10. Elektrisches Schienenfahrzeug mit einer Schaltung (1) zur Leistungsverteilung nach einem der vorhergehenden Ansprüche.

11. Schienenfahrzeug nach Anspruch 10 rückbezogen auf die Ansprüche 7 und 8, **dadurch gekennzeichnet, dass** der mindestens eine bidirektionale Wandler (4) an seinem dem AC-Leistungsbus (2) abgekehrten DC-Ausgang (24) eine Gleichspannung bereitstellt und an eine Batterie (25) angeschlossen ist.

12. Schienenfahrzeug nach Anspruch 10 oder 11 rückbezogen auf die Ansprüche 3 und 6, **dadurch gekennzeichnet, dass** einer der beiden bidirektionalen Wandler (5) an seinem dem AC-Leistungsbus (2) abgekehrten AC-Ausgang (29) eine Wechselspannung bereitstellt und an eine externe Wechselspannungsquelle anschließbar ist.

## Claims

1. Power distribution circuit (1) of an electric rail vehicle for supplying power to one or more on-board electrical systems as well as to the traction drive from an external voltage which is tapped off using a current collector, said circuit having
- a two-pole AC power bus (2) and
- at least three converters (3 to 6) connected to the AC power bus;
- wherein one of the converters (3)
- is unidirectional and is configured to supply electrical power to the AC power bus (2), and
- is connected, at its DC input (12) facing away from the AC power bus (2), to a DC link circuit fed by means of the current collector, and
- wherein all of the at least three converters (4 to 6) connected to the AC power bus except the one converter (3) each have a transformer (9 to 11), **characterized in that**
- all of the at least three converters (4 to 6) connected to the AC power bus except the one converter (3) each have a series resonant circuit (7) connected to the two poles of the power bus;
- at least one of the converters (4 to 6) having a series resonant circuit (7) is a bidirectional converter and
- each series resonant circuit (7) has a capacitor (8) connected in series with the primary side of the respective transformer (9 to 11).

2. Circuit (1) according to Claim 1, **characterized in that** all of the series resonant circuits (7) connected to the power bus (2) have the same resonant capacitance and the same resonant inductance.

3. Circuit (1) according to either of the preceding claims, **characterized in that** at least two of the converters (3 to 6) having a series resonant circuit (7) are bidirectional converters.

4. Circuit (1) according to one of the preceding claims, **characterized in that** each of the converters (3 to 5) that can be used to supply electrical power to the AC power bus (2) is operated as a resonant converter.

5. Circuit (1) according to one of the preceding claims, **characterized in that** one of the converters (5, 6) has an AC output (29, 35) facing away from the AC power bus (2).

6. Circuit (1) according to Claim 5, **characterized in that** the converter (5) having the AC output (29) facing away from the AC power bus (2) has a terminal (30) for an AC voltage source.

7. Circuit (1) according to one of the preceding claims, **characterized in that** one of the converters (4) has a DC output (24) facing away from the AC power bus (2).

8. Circuit (1) according to one of the preceding claims, **characterized in that** a battery (25) is connected to an output (24) of the at least one bidirectional converter (4), said output (24) facing away from the AC power bus (2).

9. Circuit (1) according to one of the preceding claims, **characterized in that** one of the converters (3) has a DC input (12) facing away from the AC power bus (2).

10. Electric rail vehicle having a power distribution circuit (1) according to one of the preceding claims.

11. Rail vehicle according to Claim 10 referred back to Claims 7 and 8, **characterized in that** the at least one bidirectional converter (4), at its DC output (24) facing away from the AC power bus (2), provides a DC voltage and is connected to a battery (25).

12. Rail vehicle according to Claim 10 or 11 referred back to Claims 3 and 6, **characterized in that** one of the two bidirectional converters (5), at its AC output (29) facing away from the AC power bus (2), provides an AC voltage and can be connected to an external AC voltage source.

## Revendications

1. Circuit (1) de distribution de puissance au niveau d'un véhicule ferroviaire électrique pour alimenter en tension, en plus du moteur de traction, également un ou plusieurs réseaux de bord à partir d'une tension externe prélevée avec un pantographe, comprenant
- un bus de puissance CA bipolaire (2) et
- au moins trois convertisseurs (3 à 6) raccordés au bus de puissance CA ;
- l'un des convertisseurs (3)
- étant unidirectionnel et configuré pour acheminer de la puissance électrique au bus de puissance CA (2) et
- étant raccordé par son entrée CC (12) opposée au bus de puissance CA (2) à un circuit intermédiaire de tension continue qui est alimenté par le biais du pantographe, et
- la totalité des au moins trois convertisseurs (4 à 6) raccordés au bus de puissance CA, à l'exception dudit convertisseur (3), possédant respectivement un transformateur (9 à 11),
**caractérisé en ce**
- **que** la totalité des au moins trois convertisseurs (4 à 6) raccordés au bus de puissance CA, à l'exception dudit convertisseur (3), possèdent respectivement un circuit de résonance série (7) raccordé aux deux pôles du bus de puissance ;
- **qu'**au moins l'un des convertisseurs (4 à 6) qui possèdent un circuit de résonance série (7) est un convertisseur bidirectionnel et
- **que** chaque circuit de résonance série (7) possède un condensateur (8) branché en série avec le côté primaire du transformateur (9 à 11) correspondant.

2. Circuit (1) selon la revendication 1, **caractérisé en ce que** tous les circuits de résonance série (7) raccordés au bus de puissance (2) possèdent les mêmes capacités de résonance et les mêmes inductances de résonance.

3. Circuit (1) selon l'une des revendications précédentes, **caractérisé en ce qu'**au moins deux des convertisseurs (3 à 6) qui possèdent un circuit de résonance série (7) sont des convertisseurs bidirectionnels.

4. Circuit (1) selon l'une des revendications précédentes, **caractérisé en ce que** chacun des convertisseurs (3 à 5) avec lequel la puissance électrique peut être acheminée au bus de puissance CA (2) fonctionne en tant que convertisseur à résonance.

5. Circuit (1) selon l'une des revendications précédentes, **caractérisé en ce que** l'un des convertisseurs (5, 6) possède une sortie CA (29, 35) à l'opposé du bus de puissance CA (2).

6. Circuit (1) selon la revendication 5, **caractérisé en ce que** le convertisseur (5) qui possède la sortie CA (29) à l'opposé du bus de puissance CA (2) possède une borne (30) pour une source de tension alternative.

7. Circuit (1) selon l'une des revendications précédentes, **caractérisé en ce que** l'un des convertisseurs (4) possède une sortie CC (24) à l'opposé du bus de puissance CA (2).

8. Circuit (1) selon l'une des revendications précédentes, **caractérisé en ce qu'**une batterie (25) est raccordée à une sortie (24) à l'opposé du bus de puissance CA (2) de l'au moins un convertisseur bidirectionnel (4).

9. Circuit (1) selon l'une des revendications précédentes, **caractérisé en ce que** l'un des convertisseurs (3) possède une entrée CC (12) à l'opposé du bus de puissance CA (2).

10. Véhicule ferroviaire électrique équipé d'un circuit (1) de distribution de puissance selon l'une des revendications précédentes.

11. Véhicule ferroviaire selon la revendication 10 se référant aux revendications 7 et 8, **caractérisé en ce que** l'au moins un convertisseur bidirectionnel (4) délivre une tension continue à sa sortie CC (24) à l'opposé du bus de puissance CA (2) et est raccordé à une batterie (25).

12. Véhicule ferroviaire selon la revendication 10 ou 11 se référant aux revendications 3 et 6, **caractérisé en ce que** l'un des deux convertisseurs bidirectionnels (5) délivre une tension alternative à sa sortie CA (29) à l'opposé du bus de puissance CA (2) et peut être raccordé à une source de tension alternative externe.
